(19)

Europäisches
Patentamt
European
Patent Office
Office européen
des brevets

(11) **EP 2 437 083 A2**

(12) **EUROPEAN PATENT APPLICATION**

(43) Date of publication:
 **04.04.2012 Bulletin 2012/14**

(51) Int Cl.:
 *G01W 1/10* *(2006.01)*

(21) Application number: **11183479.2**

(22) Date of filing: **30.09.2011**

| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (71) Applicant: **Seiko Epson Corporation**<br>**Shinjuku-ku**<br>**Tokyo (JP)** |
|---|---|
| (30) Priority: **04.10.2010 JP 2010224643** | (72) Inventor: **Fujisaki, Masanobu**<br>**Nagano, 392-8502 (JP)** |
| | (74) Representative: **HOFFMANN EITLE**<br>**Patent- und Rechtsanwälte**<br>**Arabellastraße 4**<br>**81925 München (DE)** |

(54) **Weather variation forecast information providing system and weather variation forecast information providing method**

(57)  A weather variation forecast information providing system includes at least three atmospheric pressure measuring devices that are arranged at different positions in a specific local region and a data processing device that processes atmospheric pressure data measured by each of the atmospheric pressure measuring devices. The data processing device includes an atmospheric pressure data acquiring unit that consecutively acquires the atmospheric pressure data measured by each of the atmospheric pressure measuring devices, an atmospheric pressure gradient calculating unit that calculates a two-dimensional atmospheric pressure gradient vector including atmospheric pressure gradients at a given position in the specific region in two directions as elements based on the atmospheric pressure data acquired from three of the atmospheric pressure measuring devices arranged at three positions that are not located on one straight line, and a weather variation forecast information generating unit that generates the information used for forecasting a given weather variation in the specific region based on the atmospheric pressure gradient vector.

FIG. 1

EP 2 437 083 A2

**Description**

BACKGROUND

1. Technical Field

The present invention relates to a weather variation forecast information providing system and a weather variation forecast information providing method that provide information used for forecasting local weather variations with high accuracy.

2. Related Art

In weather information system services that are provided by current private weather companies, the result of a numerical prediction model generated by the respective Meteorological Agency or broad-area nationwide data such as AMeDAS (Automated Meteorological Data Acquisition System) is applied and is displayed as an image in a computer. In other words, grid point value data (hereinafter, referred to as GPV data) that is based on the numerical prediction model generated by a super computer of the respective Meteorological Agency has become mainstream in forecasting. This GPV data covers a broad range that includes not only the Japanese archipelago but also the costal sea area surrounding Japan, and accordingly, it is difficult to forecast local weather of a narrow range based on such broad range data. The reason for this is that even one area of the smallest grid of the GPV data is about 30 km wide (for example, an area into which Tokyo to Kawasaki fits), and local weather, for example, of Haneda Airport or Yoyogi Park is not captured and cannot be analyzed based on this model. Thus, in a case where a local forecast for each user is generated based on the result of the numerical predication model, each time the forecast is generated, a weather engineer divides the result into data for a small region by using a computer technique and adds geographical correction data thereto, whereby an atmospheric phenomenon in the result of the wide-area model is interpreted into a local forecast in a narrow sense. However, even in a case where such interpretation is performed, local area-specific data is not originally included in the GPV data, and accordingly, an accurate result cannot be acquired.

It is known that a cumulus cloud or a cumulonimbus cloud is commonly generated by a strong ascending air current. When such a cloud is in its decay period, precipitation particles develop a frictional effect on the surrounding air, and thereby a descending air current is generated. Of such descending air currents, a descending air current that is extremely strong so as to cause disaster to the ground is called a downburst. Such a downburst frequently causes various damage (sometimes serious damage), and accordingly, it is a weather phenomenon to be given the upmost attention particularly for airplanes due to the seriousness. In addition, the wind velocity of the descending air stream is commonly observed as an instant wind velocity of about 30 (m/s) that is the same level as that of a "strong typhoon" or a tornado of F1, and the descending air stream rarely reaches a wind velocity that is several times thereof.

After the being blown down near to the ground, the downburst collides with the ground surface so as to spread in the horizontal direction. A downburst of which the spread is relatively small to be less than about 4 km is called a microburst, and a downburst of which the spread is relatively large to be equal to or larger than 4 km is called a macroburst. Usually, microbursts are stronger than macrobursts and have a wind velocity that is higher than that of macrobursts.

In addition, in an observation using a Doppler radar, a burst having a difference (corresponding to a difference between wind velocities of horizontal streams) of wind velocities in two directions getting closer to or farther from the radar equal to or higher than 10 (m/s) is regarded as a downburst. However, it is difficult to determine a burst of which the difference between the wind velocities is excessively high on a radar, and accordingly, a microburst of which the range of the difference between the wind velocities is less than 4 km is targeted.

For an airplane that is taking-off or landing, such a downburst can be a phenomenon directly leading it to a crash. The reason for this is that when the plane flying at a speed close to a stalling speed is landed in the state in which the posture of the plane is unstable, the plane can be pushed to the ground due to a strong descending downstream. In addition, as a phenomenon that occurs simultaneously with the downburst, there is windshear. In such a phenomenon, a descending air stream blows from the center of the downburst to the ground, and the descending air stream is deflected from the ground so as to result in air turbulence, and the direction of the wind changes in a radial pattern from the center of the downburst. In other words, the direction of the wind rapidly changes at low elevation.

For example, in a case where a downburst occurs in front of a runway when a plane is in a landing approach, first, the plane is uplifted due to a strong headwind. Although a pilot continues to perform the landing approach by lowering the engine output in response to this, when the plane passes through the center area of the downburst (microburst), the plane is pressed toward the ground at once, and then the plane is faced with a strong tailwind. Accordingly, although the pilot feels the need to raise the engine output so as to increase the airspeed, there is a time lag of several seconds from the operation of the pilot to an increase in the output in a jet engine for a civilian airplane, differently from a reciprocating engine. Accordingly, there is originally a small margin up to the stalling speed at the time of landing, and accordingly, the plane instantly is trapped into the stalling speed, whereby the plane may fall without any time for recovery. Even when the plane does not fall, the landing is accompanied with a strong impact that is close to a crash.

Such accidents frequently occurred in the U.S.A. in the 1970's and 1980's in which there were a large number of commercial airlines. Accordingly, recently, research has been made for installing a Doppler radar at an airport, detecting and predicting the occurrence of downbursts, and preventing plane crashes. In addition, a countermeasure for windshear has progressed from the aircraft side, and in aircraft models A320, and the like, when windshear is detected, a program is operated in which a warning is announced, and the planes automatically enter a go-around state so as to avoid the windshear.

In JP-A-09-049884, a local weather forecast method is proposed in which past weather phenomenon data is learned many times in accordance with a change in the surrounding environment by using a neural network, and weather at a spot that is locally specified is forecasted based on a "threshold value" and a "synapse coupling coefficient" calculated as a result of the learning.

Accordingly, a high-accuracy forecast that is locally limited can be generated by using an independent weather network without sticking to the numerical prediction model of the respective Meteorological Agency.

In Japanese Patent No. 3904420, as a method of selecting a weather forecast result by using a motion vector of low atmospheric pressure, a method of selecting a weather forecast result is proposed in which comparing a plurality of motion vectors acquired as a plurality of weather forecast results calculated based on the motion vector of low atmospheric pressure and weather data at a specific time point and selecting a weather forecast result corresponding to a predicted motion vector having the smallest difference from the above-described motion vector and storing data of the weather forecast result in a storage device are included.

Accordingly, a new technique for improving the accuracy of a weather forecast by appropriately correcting the weather forecast can be provided.

However, according to the technique disclosed in JP-A-09-049884, for example, the local weather of Haneda is forecasted based on current values of the direction of the wind, the velocity of the wind, and the atmospheric pressure that are actually measured and the current value of the atmospheric pressure of Choshi, Omaezaki, Hachijojima, and Akita as four observation points located to the east, west, south, and north from Haneda as the center that are actually measured. However, while the size of the weather phenomenon to be acquired is several kilometers, the distance between the observation points is too far. Accordingly, it is difficult to acquire a phenomenon causing a local weather variation, and the weather variation cannot be accurately forecasted.

In addition, low atmospheric pressure described in Japanese Patent No. 3904420 is low atmospheric pressure that appears in a weather map as an infrared picture, and low atmospheric pressure that is locally generated due to a cumulus cloud or a cumulonimbus cloud cannot be acquired. In other words, information relating to low atmospheric pressure that is acquired from an infrared picture the resolution capability in terms of the size is not sufficient, and the realtimeliness of the acquired information is insufficient.

SUMMARY

An advantage of the invention is that it provides a weather variation forecast information providing system and a method of providing weather variation forecast information for acquiring the presence of a local weather disturbance and providing information used for accurately forecasting a weather variation forecast due to the weather disturbance.

(1) An aspect of the invention is directed to a weather variation forecast information providing system that provides information used for forecasting a given weather variation that occurs due to a change in atmospheric pressure in a specific local region. The weather variation forecast information providing system includes: at least three atmospheric pressure measuring devices that are arranged at different positions in the specific region; and a data processing device that processes atmospheric pressure data measured by each of the atmospheric pressure measuring devices. The data processing device includes: an atmospheric pressure data acquiring unit that consecutively acquires the atmospheric pressure data measured by each of the atmospheric pressure measuring devices; an atmospheric pressure gradient calculating unit that calculates a two-dimensional atmospheric pressure gradient vector including atmospheric pressure gradients at a given position in the specific region in two directions as elements based on the atmospheric pressure data acquired by the atmospheric pressure data acquiring unit from three of the atmospheric pressure measuring devices arranged at three positions that are not located on one straight line; and a weather variation forecast information generating unit that generates the information used for forecasting the weather variation based on the atmospheric pressure gradient vector calculated by the atmospheric pressure gradient calculating unit.

The given weather variation may be a weather variation that occurs due to a change in the atmospheric pressure and, for example, may be a weather variation such as a thunderstorm, localized torrential rain, a tornado, or a downburst that occurs due to generation of local low atmospheric pressure.

It is known that a weather variation such as a thunderstorm, localized torrential rain, a tornado, or a downburst is due to generation of a cumulonimbus cloud. Generally, cumulonimbus clouds are known to be formed by a strong ascending air current, and the atmospheric pressure near the ground is lowered in accordance with the generation of the ascending air current. According to the above-described weather variation forecast information providing system, the direction of positions at which a change in the atmospheric pressure is large can be specified by measuring the atmospheric pressure gradients in two directions. Accordingly, a local weather disturbance (various precipitation cells, small low atmospheric pressure, or the like) causing a rapid change in the atmospheric pressure is acquired, and therefore, information used for accurately forecasting the weather variation due to the weather disturbance can be provided.

(2) In the above-described weather variation forecast information providing system, the weather variation forecast information generating unit may generate information indicating whether or not low atmospheric pressure is generated as the information used for forecasting the weather variation based on a magnitude of the atmospheric pressure gradient vector calculated by the atmospheric pressure gradient calculating unit.

In such a case, an atmospheric pressure difference is small before low atmospheric pressure is generated, however, when the low pressure is generated, the atmospheric pressure difference on the vicinity thereof increases. Accordingly, by monitoring the magnitude of the atmospheric pressure gradient vector, the moment at which the low atmospheric pressure is generated can be acquired.

(3) In the above-described weather variation forecast information providing system, the weather variation forecast information generating unit may generate information of a direction of low atmospheric pressure in the specific region as the information used for forecasting the weather variation based on a direction of the atmospheric pressure gradient vector calculated by the atmospheric pressure gradient calculating unit.

In such a case, since the atmospheric pressure gradient vector includes atmospheric pressure gradients in the two directions as the elements thereof, the direction in which small local low pressure (precipitation cell) that is generated at this point is located can be specified based on the direction of the atmospheric pressure gradient vector.

(4) In the above-described weather variation forecast information providing system, the weather variation forecast information generating unit may generate at least one of movement direction information, movement speed information, movement distance information, and movement time information of low atmospheric pressure in the specific region as the information used for forecasting the weather variation based on a temporal change in the atmospheric pressure gradient vector calculated by the atmospheric pressure gradient calculating unit.

In such a case, since the direction of the low atmospheric pressure can be specified based on the direction of the atmospheric pressure gradient vector, the movement of the low atmospheric pressure can be followed by monitoring the temporal change in the atmospheric pressure gradient vector.

(5) In the above-described weather variation forecast information providing system, the atmospheric pressure gradient calculating unit may calculate a three-dimensional atmospheric pressure gradient vector including atmospheric pressure gradients at a given position in three directions as elements based on the atmospheric pressure data acquired by the atmospheric pressure data acquiring unit from four of the atmospheric pressure measuring devices arranged at four positions that are not located on one plane instead of the two-dimensional atmospheric pressure gradient vector.

In such a case, detailed information can be generated based on not only the atmospheric pressure gradient in the horizontal direction but also the atmospheric pressure gradient in the elevation direction.

(6) In the above-described weather variation forecast information providing system, it may be configured such that the atmospheric pressure gradient calculating unit sets three of the atmospheric pressure measuring devices arranged at three positions that are not on one straight line or four of the atmospheric pressure measuring devices arranged at four positions that are not on one plane as one set and calculates the atmospheric pressure gradient vector for each of a plurality of the sets, and the weather variation forecast information generating unit generates the information used for forecasting the weather variation based on a plurality of the atmospheric pressure gradient vectors calculated by the atmospheric pressure gradient calculating unit.

In such a case, a location (for example, the location of low atmospheric pressure) at which an atmospheric pressure change is large can be specified based on the direction of the atmospheric pressure gradient vector calculated for each set.

(7) The above-described weather variation forecast information providing system may further include a weather variation forecast unit that determines whether or not a given criterion is satisfied based on the information used for forecasting the weather variation and forecasts an occurrence of the weather variation based on a result of the determination.

In such a case, the forecast of the weather variation can be automatically performed.

(8) In the above-described weather variation forecast information providing system, each of the atmospheric pressure measuring devices may include a pressure-sensitive element that changes a resonance frequency in accordance with pressure and an atmospheric pressure sensor that outputs the atmospheric pressure data according to a vibration frequency of the pressure-sensitive element.

While the resolution capability of a barometer generally used in weather observation is in the order of hPa, the resolution capability of the order of Pa can be relatively easily acquired in a frequency variation-type atmospheric pressure sensor by measuring the vibration frequency of a pressure-sensitive element by using a high-frequency clock signal. Accordingly, by employing a frequency variation-type atmospheric pressure sensor having a high resolution capability, a small change in the atmospheric pressure in a short time is acquired, whereby information that is useful for forecasting a weather variation can be provided. In addition, the speed of change in the atmospheric pressure, the variation amount of the atmospheric pressure, and the change state of the atmospheric pressure are detected with high accuracy, and accordingly, information that is used for forecasting a weather variation (for example, torrential rain, a tornado, or the like that is generated due to local low atmospheric pressure). By analyzing the information, a given weather variation can be forecasted with high accuracy.

(9) In the above-described weather variation forecast information providing system, the pressure-sensitive element included in the atmospheric pressure sensor may be a double-ended tuning fork-type piezoelectric resonator.

In such a case, by using the double-ended tuning fork-type piezoelectric resonator, an atmospheric pressure sensor having higher resolution capability can be realized.

(10) Another aspect of the invention is directed to a method of providing weather variation forecast information in which information used for forecasting a given weather variation that occurs due to a change in atmospheric pressure in a specific local region is provided. The method includes: measuring atmospheric pressure by using at least three atmospheric pressure measuring devices that are arranged at different positions in the specific region; consecutively acquiring the atmospheric pressure data measured by each of the atmospheric pressure measuring devices; calculating a two-dimensional atmospheric pressure gradient vector including atmospheric pressure gradients at a given position in the specific region in two directions as elements based on the atmospheric pressure data acquired from three of the atmospheric pressure measuring devices arranged at three positions that are not located on one straight line in the consecutively acquiring of the atmospheric pressure data; and generating the information used for forecasting the weather variation based on the atmospheric pressure gradient vector calculated in the calculating of a two-dimensional atmospheric pressure gradient vector.

## BRIEF DESCRIPTION OF THE DRAWINGS

The invention will be described with reference to the accompanying drawings, wherein like numbers reference like elements.

Fig. 1 is a diagram showing a configuration example of an atmospheric pressure sensor according to an embodiment.

Fig. 2 is a schematic diagram showing a cross-section of a pressure sensor device according to an embodiment.

Fig. 3 is a schematic diagram showing a cross-section of a pressure sensor device according to an embodiment.

Fig. 4 is a bottom diagram schematically showing a resonator element and a diaphragm according to an embodiment.

Fig. 5 is a diagram showing the configuration of a weather variation forecast information providing system according to an embodiment.

Fig. 6 is a diagram for illustrating a two-dimensional atmospheric pressure gradient vector.

Fig. 7 is a diagram illustrating a technique for specifying the location of low atmospheric pressure.

Fig. 8 is a diagram showing an example of a forecast determination table.

Fig. 9 is a flowchart showing an example of the process of a weather variation forecast information providing system.

Fig. 10 is a diagram for illustrating a three-dimensional atmospheric pressure gradient vector.

Fig. 11 is a diagram for illustrating a technique of specifying the position of low atmospheric pressure.

## DESCRIPTION OF EXEMPLARY EMBODIMENTS

Hereinafter, a preferred embodiment of the invention will be described in detail with reference to the accompanying drawings. However, the embodiment described below is not for the purpose of limiting the scope of the invention defined by the appended claims. In addition, not all the configurations described below are necessarily essential constituent elements of the invention.

1. Configuration of Atmospheric pressure Sensor

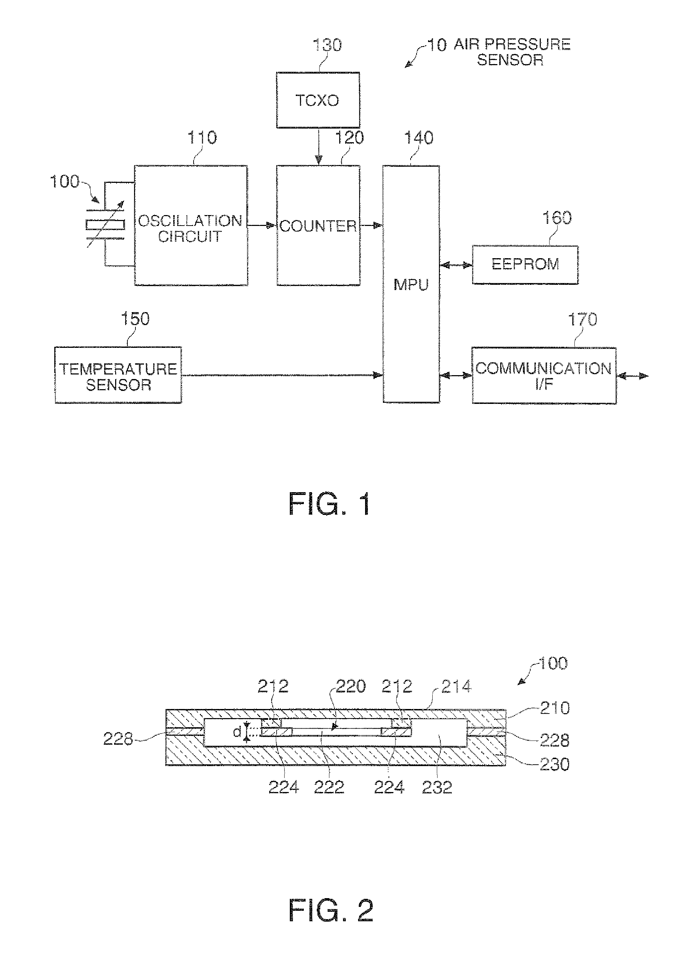

Fig. 1 is a diagram showing a configuration example of an atmospheric pressure sensor used in a weather variation forecast information providing system according to this embodiment. The atmospheric pressure sensor according to this embodiment may have a configuration acquired by omitting a part of the constituent elements shown in Fig. 1 or adding other constituent elements to the configuration shown in Fig. 1.

The atmospheric pressure sensor 10 according to this embodiment is configured so as to include a pressure sensor device 100, an oscillation circuit 110, a counter 120, a TCXO (Temperature Compensated Crystal Oscillator) 130, an MPU (Micro Processing Unit) 140, a temperature sensor 150, an EEPROM (Electrically Erasable Programmable Read Only Memory) 160, and a communication interface (I/F) 170.

The pressure sensor device 100 includes a pressure-sensitive element using a system (vibration system) using a change in the resonance frequency of a resonator element. This pressure-sensitive element, for example, is a piezoelectric resonator formed from a piezoelectric material such as quartz crystal, lithium niobate, or lithium tantalate. For example, a tuning fork type resonator, a double-ended tuning fork type resonator, an AT resonator (thickness shear resonator), an SAW resonator, or the like can be applied thereto.

Particularly, compared to the AT resonator (thickness sliding resonator) and the like, a piezoelectric resonator of the double-ended tuning fork type has an extremely large change in the resonance frequency with respect to a tensile or compressive stress and has a large variable width of the resonance frequency. Accordingly, by using the piezoelectric resonator of the double-ended tuning fork type as the pressure-sensitive element, an atmospheric pressure sensor that can detect a small pressure difference and has high resolution can be realized. Accordingly, the atmospheric pressure sensor 10 according to this embodiment uses the piezoelectric resonator of the double-ended tuning fork type as the air-sensitive element. In addition, by selecting quartz crystal that has a high Q value and superior temperature stability as a piezoelectric material, superior stability and the resolution and the accuracy having a highest level can be realized.

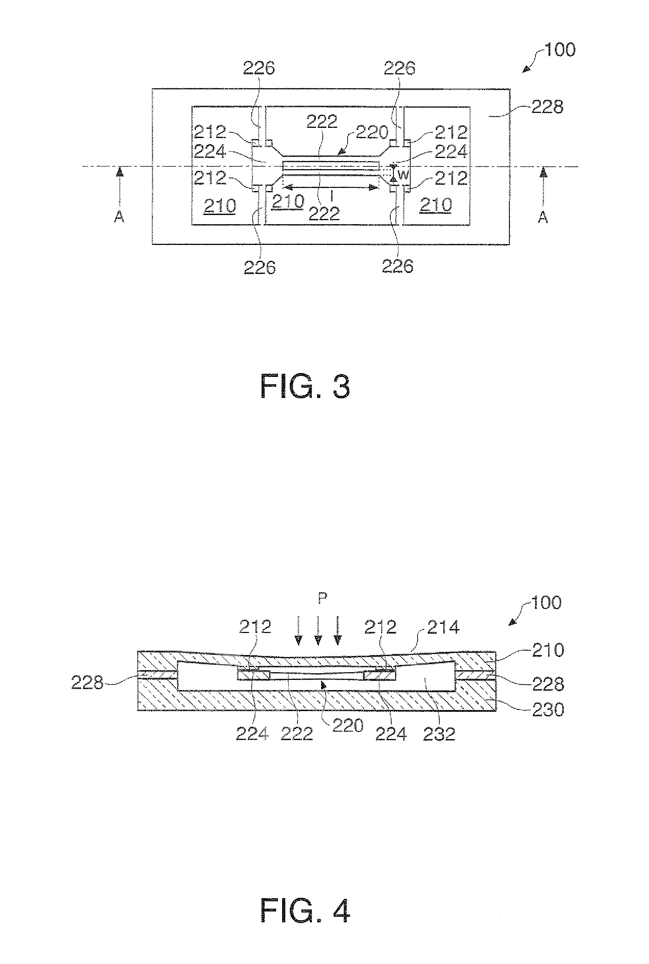

Fig. 2 is a schematic diagram showing a cross-section of a pressure sensor device 100 according to this embodiment. Fig. 3 is a bottom view schematically showing a resonator element 220 and a diaphragm 210 of the pressure sensor device 100 according to this embodiment. In Fig. 3, a base 230 serving as a sealing plate is not shown. Fig. 2 corresponds to a cross-section taken along line A to A shown in Fig. 3.

The pressure sensor device 100 includes the diaphragm 210, the resonator element 220, and the base 230 serving as a sealing plate.

The diaphragm 210 is a flat plate-shaped member having a flexible portion that bends by receiving pressure. The outer face of the diaphragm 210 is a pressure receiving face 214, and one pair of protrusions 212 are formed on the backside of the pressure receiving face 214.

The resonator element 220 includes one pair of base portions 224 that are formed on both ends of a vibration beam (joist) 222 and a vibration beam 222. The vibration beam 222 is formed to have a double-ended-supported beam shape between the base portions 224 forming one pair. The one pair of the base portions 224 are fixed to one pair of protrusions 212 formed in the diaphragm 210. In addition, electrodes not shown in the figure are appropriately formed in the vibration beam 222, and, by supplying a driving signal from the electrodes, the vibration beam 222 can be vibrated in a bending manner at a constant frequency. The resonator element 220 is formed from a material having piezoelectricity. As examples of the material of the resonator element 220, there are piezoelectric materials such as quartz crystal, lithium tantalate, and lithium niobate. The resonator element 220 is supported by a frame 228 through support beams 226.

The base 230 is bonded to the diaphragm 210 and forms a cavity 232 between the diaphragm 210 and the base 230. By configuring the cavity 232 as a decompressed space, the Q value of the resonator element 220 can be raised (a CI value can be lowered).

In the pressure sensor device 100 having such a structure, when pressure is applied to the pressure receiving face 214, the diaphragm 210 bends so as to be deformed. Then, since one pair of the base portions 224 of the resonator element 220 are respectively fixed to one pair of the protrusions 212 of the diaphragm 210, a gap between the base portions 224 changes due to the deformation of the diaphragm 210. In other words, when pressure is applied to the pressure sensor device 100, a tensile or compressive stress can be generated in the vibration beam 222.

Fig. 4 is a schematic diagram showing the cross-section of the pressure sensor device 100 and shows a state in which the diaphragm 210 is deformed in accordance with pressure P. Fig. 4 shows an example in which the diaphragm 210 is deformed so as to protrude toward the inner side of the device by being applied with a force (pressure P) from the outer side of the pressure sensor device 100 toward the inner side thereof. In such a case, the gap between the one pair of the protrusions 212 increases. On the other hand, although not shown in the figure, in a case where a force is applied from the inner side of the pressure sensor device 100 to the outer side thereof, the diaphragm 210 is deformed so as to protrude toward the outer side of the device, whereby the gap between the one pair of the protrusions 212 decreases. Accordingly, a tensile or compressive stress is generated in a direction parallel to the vibration beams 222 of the resonator elements 220 of which the both ends are fixed to one pair of the protrusions 212. In other words, the pressure applied to the pressure receiving face 214 in the vertical direction is converted into a stress in a linear direction parallel to the vibration beam 222 of the resonator element 220 through the protrusion (support portion) 212.

The resonance frequency of the vibration beam 222 can be analyzed as below. As shown in Figs. 2 and 3, when the length, the width, and the thickness of the vibration beam 222 are denoted by 1, w, and d, an equation of motion in a case where an external force F is applied in a direction of the long side of the vibration beam 222 can be approximated as in the following Equation (1).

$$ EI\frac{\partial^4 y}{\partial x^4} + \frac{\rho A}{g}\frac{\partial^2 y}{\partial t^2} + F\frac{\partial^2 y}{\partial x^2} = 0 \cdots(1) $$

In Equation (1), E represents a vertical elastic constant (Young's modulus), p represents density, A represents the cross-sectional area of the vibration beam (= w.d), g represents gravitational acceleration, F represents an external force, y represents a displacement, and x represents an arbitrary position of the vibration beam.

By solving Equation (1) by giving a general solution and a boundary condition, Equation (2) of the resonance frequency in a case where there is no external force can be acquired.

$$ f_0 = \frac{(\lambda l)^2}{2\pi l^2}\sqrt{\frac{EI \cdot g}{\rho A}} \cdots(2) $$

By using the area moment of inertia $I = dw^3/12$, the cross-sectional area $A = dw$, and $\lambda l = 4.73$, Equation (2) can be transformed as the following Equation (3).

$$ f_0 = \frac{(4.73)^2}{2\pi}\sqrt{\frac{Eg}{12\rho}}\frac{w}{l^2} \cdots(3) $$

Accordingly, the resonance frequency $f_0$ at the time of the external force F =0 is in proportion to the width w of the beam, and is in inverse proportion to the square of the length l.

When the resonance frequency $f_F$ when the external force F is applied to the two vibration beams is acquired in a similar sequence, the following Equation (4) can be acquired.

$$ f_F = f_0\sqrt{1 - K\frac{l^2}{EI}\frac{F}{2}} \cdots(4) $$

Since the area moment $I = dw^3/12$, Equation (4) can be transformed as the following Equation (5).

$$ f_F = f_0\sqrt{1 - S_F \cdot \sigma} \cdots(5) $$

In Equation (5), $S_F$ represents stress sensitivity (= K. 12/E.(1/W)²), and σ represents stress (= F/(2A)).

As above, when the force F applied to the pressure sensor device 100 is negative for the compressive direction, and is positive for the tensile direction, in a case where the force F is applied in the compressive direction, the resonance frequency $f_F$ decreases. On the other hand, in a case where the force F is applied in the tensile direction, the resonance frequency $f_F$ increases.

Then, by correcting the linearity error due to pressure-frequency characteristics and the temperature-frequency characteristics of the pressure sensor device 100 by using a polynomial equation shown in the following Equation (6), a pressure value P having high resolution and high accuracy can be acquired.

$$P = \alpha(t)f_n^3 + \beta(t)f_n^2 + \gamma(t)f_n + \delta(t) \cdots (6)$$

In Equation (6), $f_n$ represents a sensor normalization frequency and is represented as fn = $(f_F/f_0)^2$. In addition, t represents temperature, and $\alpha$ (t), $\beta$(t), $\gamma$(t), and $\delta$(t) are represented as the following Equations (7) to (10).

$$\alpha(t) = at^3 + bt^2 + ct + d \cdots (7)$$

$$\beta(t) = et^3 + ft^2 + gt + h \cdots (8)$$

$$\gamma(t) = it^3 + jt^2 + kt + l \cdots (9)$$

$$\delta(t) = mt^3 + nt^2 + ot + p \cdots (10)$$

In Equations (7) to (10), a to p are correction coefficients.

In other words, by measuring the frequency of the output signal of the pressure sensor device 100, the vibration frequency (the resonance frequency $f_F$ when the force F is applied) of the vibration beam 222 is acquired, and the pressure P can be acquired based on Equation (6) by using the resonance frequency $f_0$ measured in advance and the correction coefficients a to p.

Referring back to Fig. 1, the oscillation circuit 110 outputs an oscillation signal that is acquired by oscillating the vibration beam 222 of the pressure sensor device 100 at the resonance frequency.

The counter 120 is a reciprocal counter that counts a predetermined period of the oscillation signal that is output by the oscillation circuit 110 by using a high-precision clock signal output from the TCXO 130. However, the counter 120 may be configured as a direct counting-type frequency counter (direct counter) that counts the number of pulses of the oscillation signal of the pressure sensor device 100 at predetermined gate time.

The MPU (Micro Processing Unit) 140 performs a process of calculating a pressure value P based on a count value of the counter 120. More specifically, the MPU 140 calculates the temperature t based on a detected value of the temperature sensor 150 and calculates $\alpha$(t), $\beta$(t), $\gamma$(t), and $\delta$(t) by using the correction coefficient values of a to p stored in the EEPROM 160 in advance in accordance with Equations (7) to (10). In addition, the MPU 140 calculates the pressure value P by using the count value of the counter 120 and the value of the resonance frequency $f_0$ stored in EEPROM 160 in advance in accordance with Equation (6). Then, the pressure value P calculated by the MPU is output to the outside of the atmospheric pressure sensor 10 through the communication interface 170.

According to the atmospheric pressure sensor 10 of the frequency-variance type having such a configuration, the vibration frequency of the pressure sensor device 100 is calculated by the counter 120 using the clock signal having high precision and a high frequency (for example, several tens MHz) that is output from the TCXO 130, and calculation of an pressure value and correction of an linearity error are performed through a digital calculation process by the MPU 140. Accordingly, a pressure value (pressure data) having high resolution equal to or less than the order of Pa and high precision can be acquired. In addition, the atmospheric pressure sensor 10 can update the atmospheric pressure data with a period of a second-order even when the counting time is considered. Therefore, a small change in the atmospheric pressure in a short time can also be acquired so as to be appropriate for real-time measurement of atmospheric pressure.

In the embodiment and Fig. 1, although the oscillation circuit that becomes the origin of the reference clock is the TCXO 130, the oscillation circuit may be configured as a quartz crystal oscillation circuit having no temperature compensation circuit, for example, a quartz crystal oscillation circuit in which an AT cut quartz crystal resonator is mounted. In such a case, since the temperature compensation circuit is not included, the precision of detection of the atmospheric pressure variance decreases. Thus, a designer may appropriately select whether, as the reference clock source, the quartz crystal oscillation circuit is used or the TCXO 130 is used in accordance with the cost or the forecast accuracy of the forecast system.

2. Configuration of Weather Variation Forecast Information Providing System

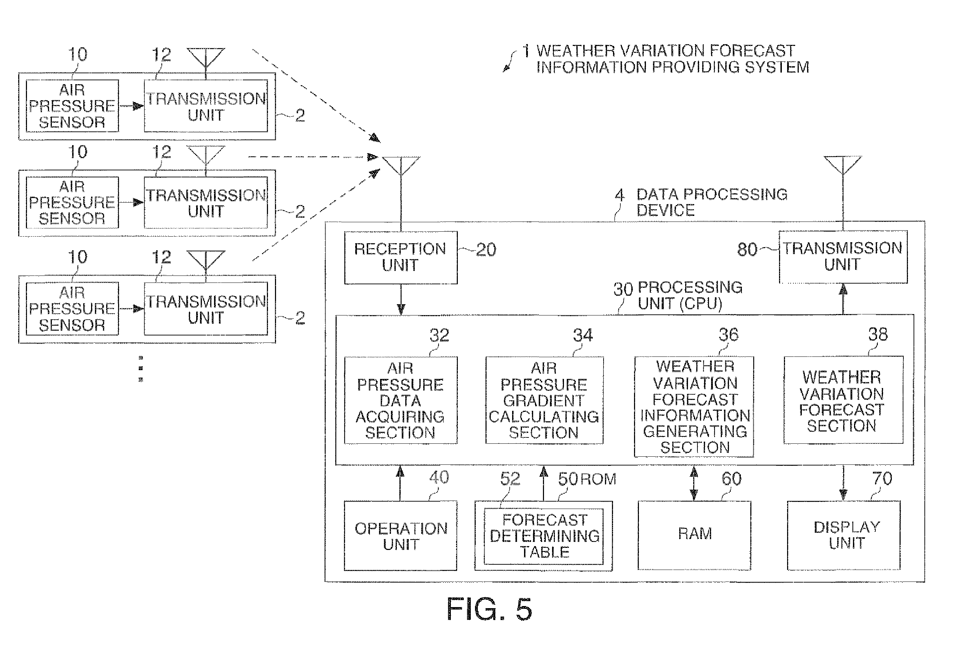

Fig. 5 is a diagram showing the configuration of a weather variation forecast information providing system according to this embodiment. In the weather variation forecast information providing system according to this embodiment, a part of the constituent elements (units) shown in Fig. 5 may be omitted or other constituent elements may be additionally provided.

The weather variation forecast information providing system 1 according to this embodiment is configured so as to include three or more atmospheric pressure measuring devices 2 and a data processing device 4 and provides information (hereafter, referred to as "weather variation forecast information") used for forecasting given weather variation that occur due to a change in the atmospheric pressure in a specific local region.

The atmospheric pressure measuring device 2 includes an atmospheric pressure sensor 10 and a transmission unit 12.

The atmospheric pressure sensor 10 includes a pressure-sensitive element that changes the resonance frequency in accordance with atmospheric pressure and a frequency variance-type sensor that outputs data according to the vibration frequency of the pressure-sensitive element. More specifically, the atmospheric pressure sensor 10 is, for example, configured as shown in Fig. 1 and is a high-resolution and high-precision sensor that can acquire a change in the atmospheric pressure equal to or less than the order of Pa in a period of the order of a second by measuring the vibration frequency of the pressure-sensitive element by using a high-frequency clock signal.

The transmission unit 12 transmits atmospheric pressure data measured in real time with a period of the order of a second by the atmospheric pressure sensor 10 as radio waves of a frequency assigned to each atmospheric pressure measuring device 2. Transmission frequencies different from one another are assigned to the atmospheric pressure measuring devices 2.

In this embodiment, a narrow region that fits into a circle having a diameter of several kilometers to several tens of kilometers is set as a specific region as an observation target, and three or more atmospheric pressure measuring devices 2 arranged so as to be fixed on an xy plane that is almost horizontal in the specific region. A distance between the atmospheric pressure measuring devices is set to about several hundred meters. The distance between the atmospheric pressure measuring devices may not be constant and, for example, the atmospheric pressure measuring device 2 may be considered to be installed to a base station of a cellular phone, a convenience store, an electric meter of a smart grid, or the like.

The data processing device 4 is configured so as to include a reception unit 20, a processing unit (CPU, Central Processing Unit) 30, an operation unit 40, a ROM 50, a RAM 60, a display unit 70, and a transmission unit 80.

The reception unit 20 receives transmission data transmitted from each atmospheric pressure measuring device 2 while sequentially changing the reception frequency so as to be the transmission frequency assigned to each atmospheric pressure measuring device 2 with a predetermined period and modulates the atmospheric pressure data. Then, the reception unit 20 transmits the modulated pressure data to the processing unit 30.

Alternatively, it may be configured such the transmission unit 12 of each atmospheric pressure measuring device 2 transmits atmospheric pressure data using radio waves of the same transmission frequency at different periodical timings determined in advance in a time divisional manner, and the reception unit 20 of the data processing device 4 receives the atmospheric pressure data in synchronization with the transmission timing of each atmospheric pressure measuring device 2.

The processing unit 30 performs various calculation processes or control processes in accordance with a program that is stored in the ROM 50. More specifically, the processing unit 30 receives the pressure data from the reception unit 20 and performs various calculation processes for the atmospheric pressure data. In addition, the processing unit 30 performs various processes according to an operation signal transmitted from the operation unit 40, a process of displaying various types of information on the display unit 70, a process of controlling data communication with an external device such as a mobile terminal through the reception unit 20, the transmission unit 80, and the like.

Particularly, in this embodiment, the processing unit 30 is configured so as to include an atmospheric pressure data acquiring section 32, an atmospheric pressure gradient calculating section 34, a weather variation forecast information generating section 36, and a weather variation forecast section 38.

The atmospheric pressure data acquiring section 32 performs a process of consecutively acquiring the atmospheric pressure data transmitted from the reception unit 20 in association with the identification ID of the atmospheric pressure measuring device 2. More specifically, the atmospheric pressure data acquiring section 32 receives the atmospheric pressure data and sequentially stores the received pressure data in the RAM 60 in association with the identification ID that is assigned to each atmospheric pressure measuring device 2.

The atmospheric pressure gradient calculating section 34 performs a process of calculating an atmospheric pressure gradient vector that includes atmospheric pressure gradients in two directions at a given position in a specific region as elements based on the acquired atmospheric pressure data acquired by the atmospheric pressure data acquiring section 32 from three atmospheric pressure measuring devices 2 arranged at three positions that are not located on a straight line. Here, the given positions, for example, may be the positions of several atmospheric pressure measuring devices 2. More specifically, the atmospheric pressure gradient calculating section 34 sequentially calculates atmospheric pressure gradient vectors in a time series based on the atmospheric pressure data stored in the RAM 60 and stores the atmospheric pressure gradient vectors in the RAM 60.

The atmospheric pressure gradient vector f is defined as in the following Equation (11).

$$ f = \nabla p = \left( \frac{\partial p}{\partial x}, \frac{\partial p}{\partial y}, \frac{\partial p}{\partial z} \right) \cdots (11) $$

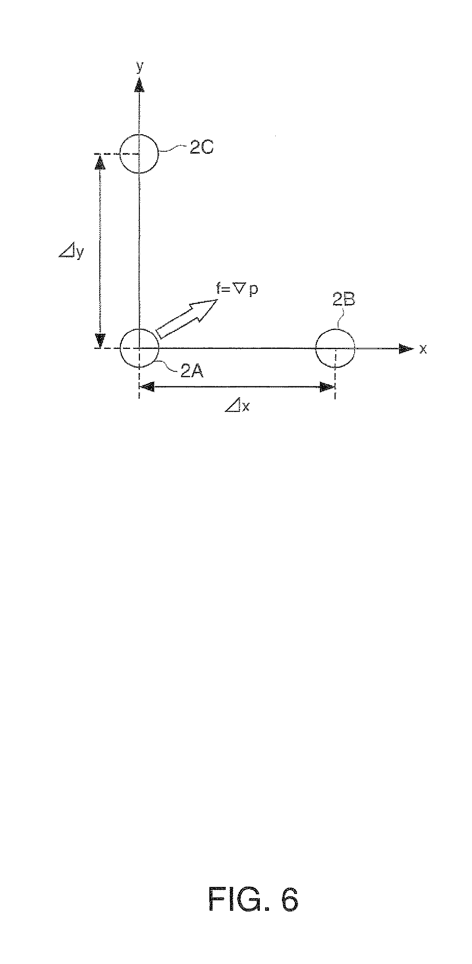

In this embodiment, as shown in Fig. 6, three atmospheric pressure measuring devices 2A, 2B, and 2C are arranged on a constant-elevation xy plane (horizontal plane) in which the position of the atmospheric pressure measuring device 2A is the origin, the direction of a straight line joining the atmospheric pressure measuring devices 2A and 2B is set as the x axis, and the direction of a straight line joining the atmospheric pressure measuring devices 2A and 2C is set as the y axis. When a distance between the atmospheric pressure measuring devices 2A and 2B is denoted by $\Delta x$, and a distance between the atmospheric pressure measuring devices 2A and 2C is denoted by $\Delta y$, and measured values (atmospheric pressure data) measured by the atmospheric pressure measuring devices 2A, 2B, and 2C are denoted by p0, p1, and p2, the atmospheric pressure gradient vector f at the position of the atmospheric pressure measuring device 2A is approximated by the following Equation (12).

$$ f = \nabla p = \left( \frac{\partial p}{\partial x}, \frac{\partial p}{\partial y}, \frac{\partial p}{\partial z} \right) \cong \left( \frac{p_1 - p_0}{\Delta x}, \frac{p_2 - p_0}{\Delta y}, 0 \right) \cdots (12) $$

In other words, the atmospheric pressure gradient $\partial p / \partial x$ in the x-axis direction is approximated as an atmospheric pressure change rate $(p_1 - p_0)/\Delta x$ in the x-axis direction that is calculated by using the atmospheric pressure data $p_0$ and $p_1$ measured by the atmospheric pressure measuring devices 2A and 2B and the distance $\Delta x$ between the atmospheric pressure measuring devices 2A and 2B. Similarly, the atmospheric pressure gradient $\partial p / \partial x$ in the y-axis direction is approximated as an atmospheric pressure change rate $(p_2 - p_0)/\Delta y$ in the y-axis direction that is calculated by using the atmospheric pressure data $p_0$ and $p_2$ measured by the atmospheric pressure measuring devices 2A and 2C and the distance $\Delta y$ between the atmospheric pressure measuring devices 2A and 2C. In this embodiment, since there is no atmospheric pressure measuring device arranged in the z axis direction (for example, the elevation direction) with respect to the atmospheric pressure measuring device 2A, an atmospheric pressure change rate in the z-axis direction cannot be calculated. Accordingly, an atmospheric pressure gradient $\delta p/\delta z$ in the z-axis direction is set as zero.

In this embodiment, the atmospheric pressure gradient calculating section 34 calculates an atmospheric pressure gradient vector (a two-dimensional atmospheric pressure gradient vector) on the xy plane at the position of the atmospheric pressure measuring device 2A in accordance with Equation (12).

Although the accuracy of the approximation of Equation (12) is improved by arranging the three atmospheric pressure measuring devices 2A, 2B, and 2C at positions as close as possible, in a case where the atmospheric pressure difference is equal to or less than the measurement resolution capability of the atmospheric pressure measuring devices as the atmospheric pressure measuring devices 2A, 2B, and 2C are too close to one another, Equation (12) cannot be correctly calculated. Thus, the arrangement of three atmospheric pressure measuring devices 2A, 2B, and 2C is determined in consideration of the calculation accuracy of the atmospheric pressure gradient vectors and the measurement resolution capability of the atmospheric pressure measuring devices. For example, in the case of atmospheric pressure measuring devices, which have high resolution of the order of Pa, capable of measuring high precision measurement, the atmospheric pressure measuring devices may be arranged so as to be separated from each other by about 100 m.

In this embodiment, the three atmospheric pressure measuring devices 2A, 2B, and 2C are arranged such that the x axis and the y axis are perpendicular to each other. However, the atmospheric pressure measuring devices 2A, 2B, and 2C may be arranged such that a two-dimensional atmospheric pressure gradient vector having a direction and a magnitude on the xy plane can be calculated. Accordingly, in a case where the x axis and the y axis are not parallel to each other, the three atmospheric pressure measuring devices 2A, 2B, and 2C may be arranged at arbitrary positions. In other words, the atmospheric pressure measuring devices 2A, 2B, and 2C may be arranged at three arbitrary positions that are not located on one straight line.

The weather variation forecast information generating section 36 performs a process of generating weather variation forecast information based on the atmospheric pressure gradient vector calculated by the atmospheric pressure gradient calculating section 34.

As can be understood from Equation (12), the atmospheric pressure gradient vector f at the position of the atmospheric pressure measuring device 2A is a vector located on the xy plane and has a direction and a magnitude. Thus, the weather variation forecast information generating section 36 may be configured to determine whether or not local low atmospheric pressure is generated in a specific region based on the magnitude $|f|$ $(= |\nabla p|)$ of the atmospheric pressure gradient vector and generate information indicating whether or not the low atmospheric pressure is generated as the weather variation forecast information. For example, in a case where low atmospheric pressure that is strong to some degree is locally generated at a place, it is understood that the magnitude of the atmospheric pressure gradient vector abruptly increases on the periphery thereof. Accordingly, by monitoring the magnitude of the atmospheric pressure gradient vector, it can be determined whether local low atmospheric pressure is generated.

As is apparent from Equation (12), the atmospheric pressure gradient vector f points a direction opposite to a relatively low atmospheric pressure area. In other words, there is low atmospheric pressure in a direction opposite to the direction of the atmospheric pressure gradient vector f. Thus, the weather variation forecast information generating section 36 may be configured so as to generate information of the direction of local low atmospheric pressure of a specific region as the weather variation forecast information based on the direction of the atmospheric pressure gradient vector.

The larger the magnitude of the atmospheric pressure gradient vector f is, the narrower a gap between isobars near the atmospheric pressure measuring device 2A is, and, generally, it is understood that a distance between the atmospheric pressure measuring device 2A and small low atmospheric pressure becomes shorter. Therefore, a schematic position of the low atmospheric pressure can be specified based on the magnitude of the atmospheric pressure gradient vector f.

In addition, when local low atmospheric pressure moves, it is understood that the direction or the magnitude of the atmospheric pressure gradient vector at a given position changes in accordance with the movement. Thus, the weather variation forecast information generating section 36 may be configured to generate at least one of the movement direction information, movement speed information, movement distance information and movement time information of local low atmospheric pressure in a specific region as the weather variation forecast information based on the temporal change in the atmospheric pressure gradient vector.

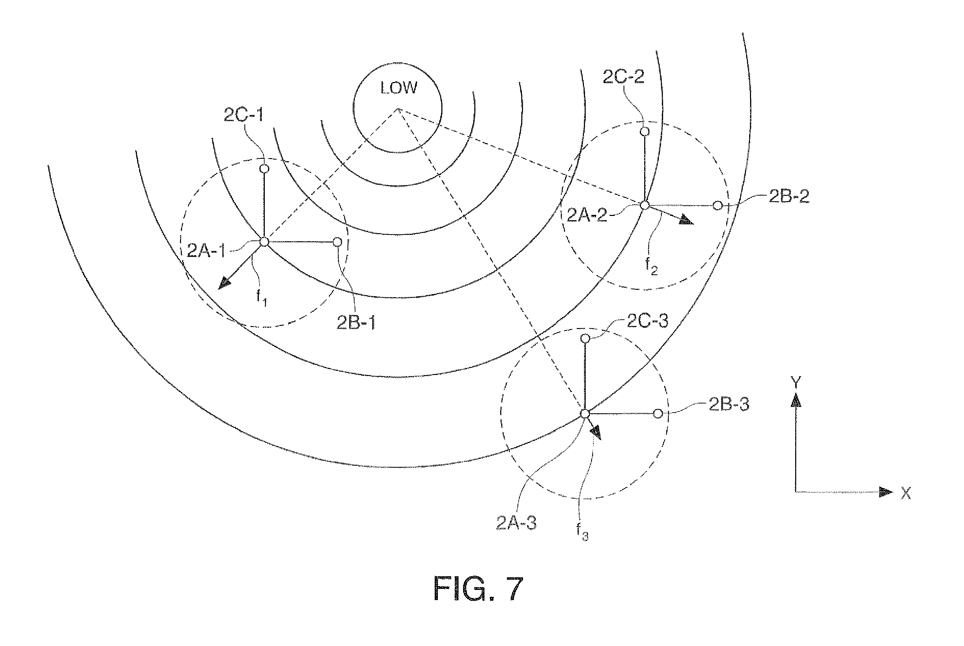

Furthermore, the atmospheric pressure gradient calculating section 34 may set three atmospheric pressure measuring devices 2A, 2B, and 2C as one set and calculate a two-dimensional atmospheric pressure gradient vector for each of a plurality of the sets. For example, as shown in Fig. 7, three atmospheric pressure measuring devices 2A-1, 2B-1, and 2C-1 having the positional relation shown in Fig. 6 are set as one set, and an atmospheric pressure gradient vector $f_1$ at the position of the atmospheric pressure measuring device 2A-1 is calculated by using the atmospheric pressure data measured by the atmospheric pressure measuring devices 2A-1, 2B-1, and 2C-1 based on Equation (12). Similarly, three atmospheric pressure measuring devices 2A-2, 2B-2, and 2C-2 having the positional relation shown in Fig. 6 are set as one set, and an atmospheric pressure gradient vector $f_2$ at the position of the atmospheric pressure measuring device 2A-2 is calculated by using the atmospheric pressure data measured by the atmospheric pressure measuring devices 2A-2, 2B-2, and 2C-2 based on Equation (12). In addition, similarly, three atmospheric pressure measuring devices 2A-3, 2B-3, and 2C-3 having the positional relation shown in Fig. 6 are set as one set, and an atmospheric pressure gradient vector $f_3$ at the position of the atmospheric pressure measuring device 2A-3 is calculated by using the atmospheric pressure data measured by the atmospheric pressure measuring devices 2A-3, 2B-3, and 2C-3 based on Equation (12).

The atmospheric pressure gradient vectors $f_1$, $f_2$, and $f_3$ respectively point directions opposite to the directions of low atmospheric pressure. Accordingly, the position of the low atmospheric pressure can be specified by using any arbitrary two of the atmospheric pressure gradient vectors $f_1$, $f_2$, and $f_3$. Thus, the weather variation forecast information generating section 36 may be configured so as to generate position information of low atmospheric pressure in a specific region as the weather variation forecast information based on a plurality of the atmospheric pressure gradient vectors calculated by the atmospheric pressure gradient calculating section 34.

In addition, in Fig. 7, for example, there is low atmospheric pressure on an extended line of a straight line joining the atmospheric pressure measuring devices 2A-1 and 2A-2, the directions of the atmospheric pressure gradient vectors $f_1$ and $f_2$ are the same, whereby the position of the low atmospheric pressure cannot be accurately specified. Thus, by arranging the atmospheric pressure measuring devices 2A-1, 2A-2, and 2A-3 at three positions that are not located on a straight line, the position of low atmospheric pressure can be constantly specified by selecting two appropriate atmospheric pressure gradient vectors of $f_1$, $f_2$, and $f_3$. In addition, by using a technique such as triangulation based on three atmospheric pressure gradient vectors $f_1$, $f_2$, and $f_3$, the position of the low atmospheric pressure can be specified with high precision.

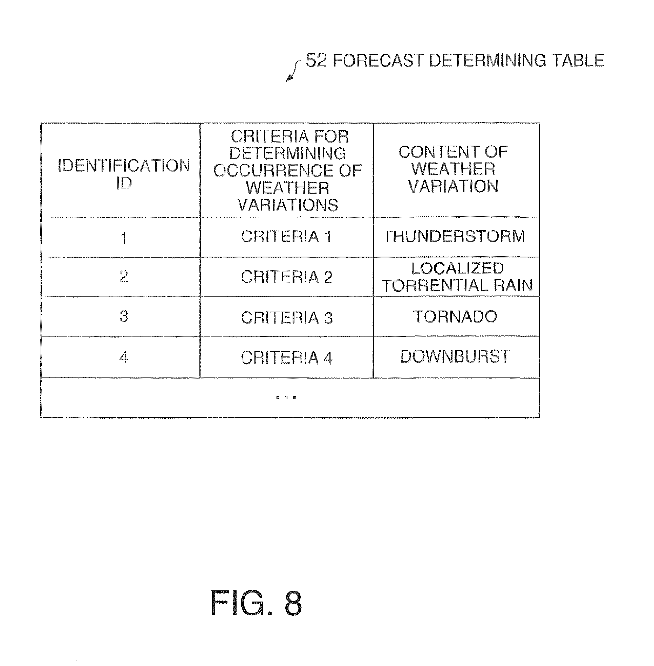

The weather variation forecast section 38 performs a process of forecasting given weather variations (a thunderstorm, localized torrential rain, a tornado, a downburst, and the like) in a specific region based on the weather variation forecast information generated by the weather variation forecast information generating section 36. More specifically, for example, as shown in Fig. 8, a forecast determining table 52 is stored in the ROM 50 in which an identification ID and a criterion used for determining the occurrence of each weather variation are associated with each weather variation such as a thunderstorm, localized torrential rain, a tornado, or a downburst. This criterion includes at least a reference for atmospheric pressure and may further include references relating to the temperature, the humidity, and the like. Then, the weather variation forecast section 38 determines whether each criterion is satisfied based on the weather variation forecast information by referring to the forecast determining table 52 and forecasts that a weather variation satisfying the criterion occurs.

For example, in a case where the magnitude of the atmospheric pressure gradient vector is larger than a predetermined threshold value, the weather variation forecast section 38 may determine that local (small) low atmospheric pressure accompanied with a rapid ascending air current is generated and forecast that a weather variation such as a thunderstorm or a localized torrential rain occurs within a predetermined time (for example, from several minutes to several tens of minutes).

Furthermore, the weather variation forecast section 38 may calculate a temporal change in the position of the low atmospheric pressure based on weather variation forecast information including the movement direction, the movement speed, and the like of the local low atmospheric pressure and forecast at least one of the occurrence position and the occurrence time of the weather variation based on the calculated result.

In addition, in a case it is sufficient for the weather variation forecast information providing system according to this embodiment to provide the weather variation forecast information, the weather variation forecast section 38 is not an essential constituent element of the processing unit 30.

The operation unit 40 is an input device that is configured by an operation key, a button switch, or the like and outputs an operation signal according to user operation to the processing unit 30.

The ROM 50 stores programs, data, and the like that are used by the processing unit 30 for performing various calculation processes and control processes. Particularly, the ROM 50 of this embodiment stores the above-described forecast determining table 52.

The RAM 60 is used as an operation area of the processing unit 30 and temporarily stores a program or data read out from the ROM 50, data input from the operation unit 40, results of operations performed by the processing unit 30 in accordance with various programs, and the like.

The display unit 70 is a display device that is configured by an LCD (Liquid Crystal Display) or the like and displays various types of information based on a display signal input from the processing unit 30.

The transmission unit 80 performs a process of transmitting the information generated by the processing unit 30 to an external device and the like. For example, the weather variation forecast information generated by the weather variation forecast information generating section 36 or the information forecasted by the weather variation forecast section 38 may be delivered to a mobile terminal or the like through the transmission unit 80.

3. Process of Weather Variation Forecast Information Providing System

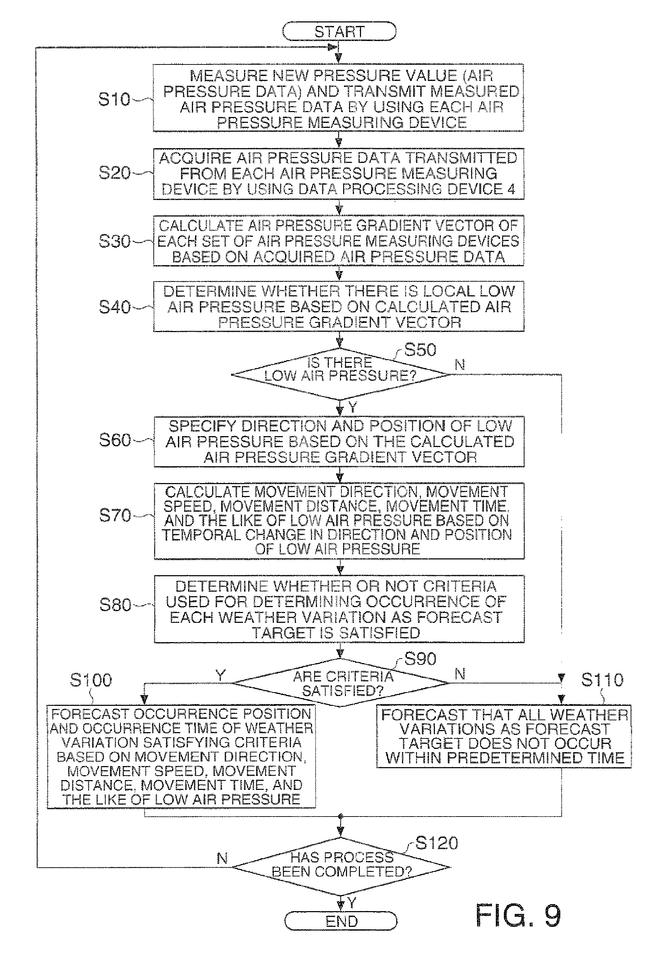

Fig. 9 is a flowchart showing an example of the process of the weather variation forecast information providing system.

First, each atmospheric pressure measuring device 2 newly measures a pressure value (atmospheric pressure data) and transmits the measured atmospheric pressure data (Step S10).

Next, the data processing device 4 acquires the atmospheric pressure data from each atmospheric pressure measuring device 2 by using the atmospheric pressure data acquiring section 32 (Step S20).

Next, the atmospheric pressure gradient calculating section 34 of the data processing device 4 calculates an atmospheric pressure gradient vector for each set of the atmospheric pressure measuring devices based on the atmospheric pressure data acquired in Step S20 (Step S30).

Next, the weather variation forecast information generating section 36 determines whether or not there is local low atmospheric pressure based on the atmospheric pressure gradient vector calculated in Step S30 (Step S40). For example, the weather variation forecast information generating section 36 may determine that there is low atmospheric pressure in a case where the magnitude of any atmospheric pressure gradient vector exceeds a threshold value and determine that there is no low atmospheric pressure in a case where the magnitude of all the atmospheric pressure gradient vectors is equal to or less than the threshold value.

In a case where low pressure is determined not to be present (No in Step S50), the weather variation forecast section 38 forecasts that a weather variation as a forecast target does not occur within a predetermined time (Step S110).

On the other hand, in a case where low atmospheric pressure is determined to be present (Yes in Step S50), the weather variation forecast information generating section 36 specifies the direction and the position of the low atmospheric pressure based on the atmospheric pressure gradient vector calculated in Step S30 (Step S60). For example, the direction of the low atmospheric pressure may be specified based on the direction of the atmospheric pressure gradient vector having a largest magnitude, or the position (the distance and the direction) of the low atmospheric pressure can be calculated by using triangulation or the like based on the directions and the magnitudes of a plurality of the atmospheric pressure gradient vectors.

Next, the weather variation forecast information generating section 36 calculates the movement direction, the movement speed, the movement distance, the movement time, and the like based on the temporal change in the direction or the position of low atmospheric pressure that has been acquired (Step S70).

Next, the weather variation forecast section 38 determines whether the criterion (the criterion set in the forecast determining table 52) for the occurrence of each weather variation as forecast targets is satisfied based on various kinds of information acquired from a time series of atmospheric pressure vectors (Step S80).

In a case where at least one criterion is satisfied (Yes in Step S90), the weather variation forecast section 38 forecasts the occurrence position and the occurrence time of the weather variation based on the movement direction, the movement speed, the movement distance, the movement time, and the like calculated in Step S70 (Step S100).

On the other hand, in a case where all the criteria are not satisfied (No in Step S90), the weather variation forecast section 38 forecasts that all the weather variations as the forecast targets do not occur within a predetermined time (Step S 110).

Then, the process of Steps S 10 to S110 is repeatedly performed until the process is completed (until Yes in Step S120).

As described above, according to the weather variation forecast information providing system according to this embodiment, by using a frequency-variation type atmospheric pressure sensor 10 that has high resolution of the order of Pa, weather variation forecast information can be provided by acquiring a small change in the atmospheric pressure in a short time. Then, by analyzing the weather variation forecast information, given weather variations can be forecasted with high accuracy.

In addition, according to this embodiment, since the generation of local low atmospheric pressure can be checked, the occurrence of the weather variation caused by the low atmospheric pressure can be forecasted. Furthermore, by calculating the movement path of the low atmospheric pressure based on the temporal change in the atmospheric pressure gradient vector, the occurrence position or the occurrence time of the weather variation can be forecasted.

In addition, a general barometer is expensive, it is not practical to arrange a plurality of barometers in a local region. In contrast to this, in this embodiment, since the atmospheric pressure sensor 10 can be provided at a low cost by using a semiconductor manufacturing technology, by arranging a plurality of sets of the atmospheric pressure measuring devices 2 in a local region, the atmospheric pressure gradient vectors at many positions can be calculated, whereby detailed weather variation forecast information can be generated. For example, in a case where a distance between the sets is set to about several hundreds of meters to several kilometers, an observation mesh of AMeDAS that is smaller than the observation mesh (one side is about 17 km to 21 km) of a regional weather observation system can be formed, and accordingly, a local weather variation that cannot be checked in AMeDAS can be accurately checked.

By using the weather variation forecast information providing system according to this embodiment, there is a possibility that warning information can be transmitted with more time to spare than a general case before a weather variation such as localized torrential rain or a downburst occurs.

4. Applications

The weather variation forecast information providing system according to this embodiment can be applied to various purposes.

For example, the weather variation forecast information providing system can be used for forecasting a downburst that occurs near a landing position on a runway in an airfield. More specifically, three or more atmospheric pressure measuring devices are set as one set, and a plurality of sets is arranged so as to surround the landing position on a runway, and an atmospheric pressure gradient vector is calculated for each set. Before a downburst occurs, an ascending current necessarily occurs so as to form an area in which the atmospheric pressure is locally low. Accordingly, by monitoring the magnitude of the atmospheric pressure gradient vector of each set, the moment at which local low atmospheric pressure occurs can be checked, and the position of the occurrence can be specified. In a case where the position of occurrence of the low atmospheric pressure is near the landing position, the temporal change in the atmospheric pressure gradient vector of each set thereafter is recorded. Then, as the ascending air current changes to a descending air current, the downburst occurs, and accordingly, when the direction of the atmospheric pressure gradient vector of each set rapidly changes or becomes unstable, the occurrence of a downburst can be forecasted near the landing position after a short time. Therefore, when there is an airplane in a landing approach, the landing can be directed to be aborted.

In addition, for example, the weather variation forecast information providing system can be used for forecasting localized torrential rain in a specific local region. In a region such as a metropolitan area in which localized torrential rain can easily occur, three or more atmospheric pressure measuring devices are set as one set, and an atmospheric pressure gradient vector is calculated for each set. Before localized torrential rain occurs, an ascending current necessarily occurs so as to form an area in which the atmospheric pressure is locally low. Accordingly, by monitoring the magnitude of the atmospheric pressure gradient vector of each set, the moment at which local low atmospheric pressure occurs can be checked, and the position of the occurrence can be specified. In a case where the occurrence of low atmospheric pressure is checked, the temporal change in the atmospheric pressure gradient vector of each set thereafter is recorded. Then, by analyzing the movement direction, the movement speed, the movement distance, the movement time, and the like of the low atmospheric pressure based on the temporal change in the atmospheric pressure gradient vector of each set, whether there is the occurrence of localized torrential rain, the position of the occurrence, the occurrence time, and the like can be forecasted. Therefore, a warning can be transmitted to a region in which the occurrence of localized torrential rain is forecasted before the occurrence thereof.

5. Modified Examples

The invention is not limited to the above-described embodiment, and various modifications can be made therein within the scope of the concept of the invention.

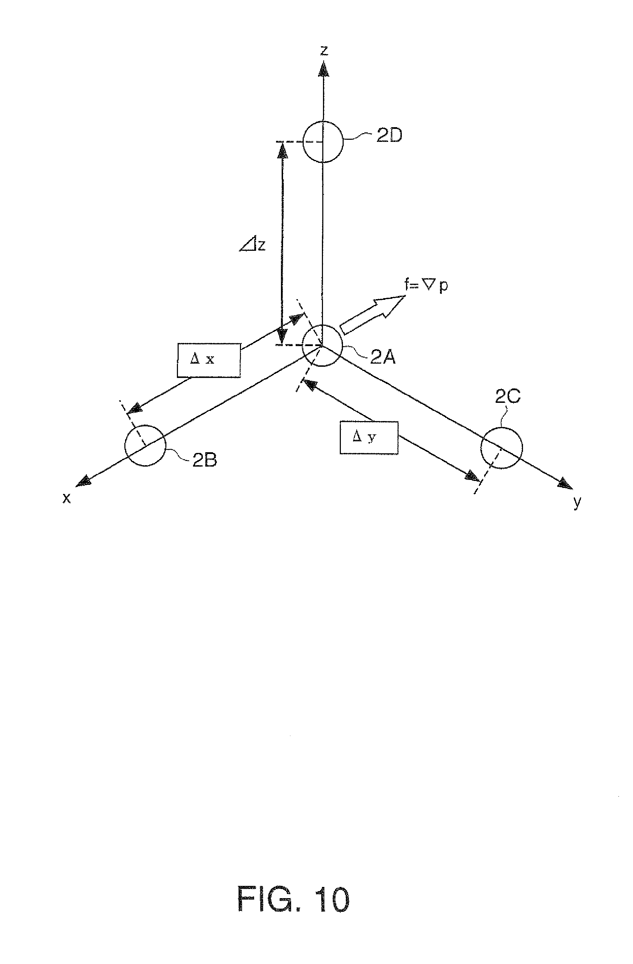

For example, as shown in Fig. 10, the embodiment may be modified such that four atmospheric pressure measuring devices 2A, 2B, 2C, and 2D are arranged in an xyz space in which the position of the atmospheric pressure measuring device 2A is set as the origin, the direction of a straight line joining the atmospheric pressure measuring devices 2A and 2B are set as the x axis, the direction of a straight line joining the atmospheric pressure measuring devices 2A and 2C are set as the y axis, and the direction of a straight line joining the atmospheric pressure measuring devices 2A and 2D are set as the z axis. For example, the xy plane is a horizontal plane, and the z-axis direction of the elevation direction. When a distance between the atmospheric pressure measuring devices 2A and 2B is denoted by $\Delta x$, a distance between the atmospheric pressure measuring devices 2A and 2C is denoted by $\Delta y$, and a distance between the atmospheric pressure measuring devices 2A and 2D is denoted by $\Delta z$, and measured values (atmospheric pressure data) measured by the atmospheric pressure measuring devices 2A, 2B, 2C, and 2D are denoted by $p_0$, $p_1$, $p_2$, and $p_3$, an atmospheric pressure gradient vector f at the position of the atmospheric pressure measuring device 2A is approximated as the following Equation (13).

$$ f = \nabla p = \left( \frac{\partial p}{\partial x}, \frac{\partial p}{\partial y}, \frac{\partial p}{\partial z} \right) \cong \left( \frac{p_1 - p_0}{\Delta x}, \frac{p_2 - p_0}{\Delta y}, \frac{(p_3 + \alpha) - p_0}{\Delta z} \right) \cdots (13) $$

In other words, the atmospheric pressure gradient $\partial p / \partial x$ in the x-axis direction is approximated as an atmospheric pressure change rate $(p_1 - p_0)/\Delta x$ in the x-axis direction that is calculated by using the atmospheric pressure data $p_0$ and $p_1$ measured by the atmospheric pressure measuring devices 2A and 2B and the distance $\Delta x$ between the atmospheric pressure measuring devices 2A and 2B. Similarly, the atmospheric pressure gradient $\partial p / \partial x$ in the y-axis direction is approximated as an atmospheric pressure change rate $(p_2 - p_0)/\Delta y$ in the y-axis direction that is calculated by using the atmospheric pressure data $p_0$ and $p_2$ measured by the atmospheric pressure measuring devices 2A and 2C and the distance $\Delta y$ between the atmospheric pressure measuring devices 2A and 2C. In addition, the atmospheric pressure gradient $\partial p / \partial z$ in the z-axis direction is approximated as an atmospheric pressure change rate $\{(p_3 + \alpha) - p_0\}/\Delta z$ in the z-axis direction that is calculated by using the atmospheric pressure data $p_0$ and $p_3$ measured by the atmospheric pressure measuring devices 2A and 2D and the distance $\Delta z$ between the atmospheric pressure measuring devices 2A and 2D. Since there is an atmospheric pressure difference of about 1 hPa according to an elevation difference of 10m near the ground, in order to acquire the variation of the atmospheric pressure of the order of Pa, a correction term $\alpha$ that cancels an atmospheric pressure difference according to the elevation difference $\Delta z$ of the atmospheric pressure measuring devices 2A and 2D is added.

The atmospheric pressure gradient calculating section 34 may calculate an atmospheric pressure gradient vector (three-dimensional atmospheric pressure gradient vector) in the xyz space at the position of the atmospheric pressure measuring device 2A by using this Equation (13). Then, the weather variation forecast information generating section 36 generates weather variation forecast information based on the three-dimensional atmospheric pressure gradient vector calculated by the atmospheric pressure gradient calculating section 34. In such a case, the direction of the low atmospheric pressure can be specified also in consideration of the elevation direction, and accordingly, the weather variation forecast information that is more useful can be provided.

In this modified example, four atmospheric pressure measuring devices 2A, 2B, 2C, and 2D are arranged such that the x axis, the y axis, and the z axis are perpendicular to one another. However, the atmospheric pressure measuring devices 2A, 2B, 2C, and 2D may be arranged such that a three-dimensional atmospheric pressure gradient vector having a direction and a magnitude in the xyz space can be calculated. Accordingly, in a case where the x axis, y axis, and the z axis are not parallel to one another, the four atmospheric pressure measuring devices 2A, 2B, 2C and 2D may be arranged at arbitrary positions. In other words, the atmospheric pressure measuring devices 2A, 2B, 2C, and 2D may be arranged at four arbitrary positions that are not located on one plane.

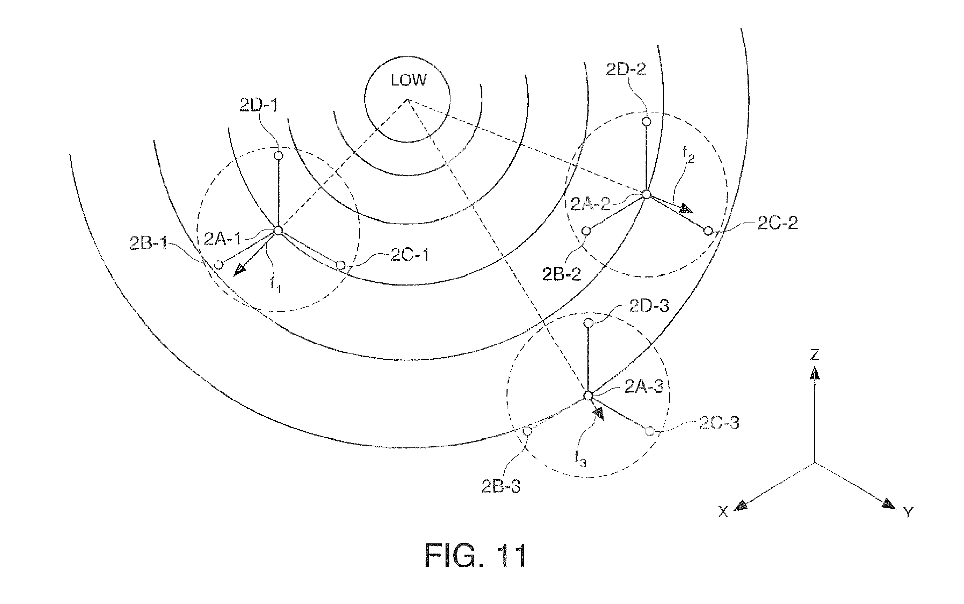

Furthermore, the atmospheric pressure gradient calculating section 34 may set four atmospheric pressure measuring devices 2A, 2B, 2C, and 2D as one set and calculate a three-dimensional atmospheric pressure gradient vector for each of a plurality of the sets. For example, as shown in Fig. 11, four atmospheric pressure measuring devices 2A-1, 2B-1, 2C-1, and 2D-1 having the positional relation shown in Fig. 10 are set as one set, and an atmospheric pressure gradient vector $f_1$ at the position of the atmospheric pressure measuring device 2A-1 is calculated by using the atmospheric pressure data measured by the atmospheric pressure measuring devices 2A-1, 2B-1, 2C-1, and 2D-1 based on Equation (13). Similarly, four atmospheric pressure measuring devices 2A-2, 2B-2, 2C-2, and 2D-2 having the positional relation shown in Fig. 10 are set as one set, and an atmospheric pressure gradient vector $f_2$ at the position of the atmospheric pressure measuring device 2A-2 is calculated by using the atmospheric pressure data measured by the atmospheric pressure measuring devices 2A-2, 2B-2, 2C-2, and 2D-2 based on Equation (13). In addition, similarly, four atmospheric pressure measuring devices 2A-3, 2B-3, 2C-3, and 2D-3 having the positional relation shown in Fig. 10 are set as one set, and an atmospheric pressure gradient vector $f_3$ at the position of the atmospheric pressure measuring device 2A-3 is calculated by using the atmospheric pressure data measured by the atmospheric pressure measuring devices 2A-3, 2B-3, 2C-3, and 2D-3 based on Equation (13).

Then, the weather variation forecast information generating section 36 may be configured so as to generate position information of low atmospheric pressure in a specific region as the weather variation forecast information based on a plurality of the atmospheric pressure gradient vectors calculated by the atmospheric pressure gradient calculating section 34.

In addition, in this embodiment, although the atmospheric pressure measuring devices 2 are installed at a fixed point, at least a part of the atmospheric pressure measuring devices 2 may be installed to a moving unit such as a vehicle. In such a case, it may be configured such that a GPS (Global Positioning System) is mounted in the moving unit, the atmospheric pressure measuring device 2 transmits the positional information of the moving unit together with the atmospheric pressure data, and the data processing device 4 acquires (stores) the atmospheric pressure data in association with the position of the moving unit.

The invention includes a configuration (for example, a configuration having the same function, the same method, and the same result or a configuration having the same object and the same advantages) that is substantially the same as the configuration described in the embodiment. In addition, the invention includes a configuration acquired by replacing a portion of the configuration described in the embodiment, which is not essential. Furthermore, the invention includes a configuration having the same operation and the same advantages as the those of the configuration described in the embodiment or a configuration that can achieve the same object as that of the embodiment. In addition, the invention includes a configuration acquired by adding known a technique to the configuration described in the embodiment.

**Claims**

1. A weather variation forecast information providing system that provides information used for forecasting a given weather variation that occurs due to a change in atmospheric pressure in a specific local region, the weather variation forecast information providing system comprising:

   at least three atmospheric pressure measuring devices that are arranged at different positions in the specific region; and

a data processing device that processes atmospheric pressure data measured by each of the atmospheric pressure measuring devices,

wherein the data processing device includes:

an atmospheric pressure data acquiring unit that consecutively acquires the atmospheric pressure data measured by each of the atmospheric pressure measuring devices;
an atmospheric pressure gradient calculating unit that calculates a two-dimensional atmospheric pressure gradient vector including atmospheric pressure gradients at a given position in the specific region in two directions as elements based on the atmospheric pressure data acquired by the atmospheric pressure data acquiring unit from three of the atmospheric pressure measuring devices arranged at three positions that are not located on one straight line; and
a weather variation forecast information generating unit that generates the information used for forecasting the weather variation based on the atmospheric pressure gradient vector calculated by the atmospheric pressure gradient calculating unit.

2. The weather variation forecast information providing system according to Claim 1, wherein the weather variation forecast information generating unit generates information indicating whether or not low atmospheric pressure is generated as the information used for forecasting the weather variation based on a magnitude of the atmospheric pressure gradient vector calculated by the atmospheric pressure gradient calculating unit.

3. The weather variation forecast information providing system according to Claim 1 or 2, wherein the weather variation forecast information generating unit generates information of a direction of low atmospheric pressure in the specific region as the information used for forecasting the weather variation based on a direction of the atmospheric pressure gradient vector calculated by the atmospheric pressure gradient calculating unit.

4. The weather variation forecast information providing system according to Claim 1,2,3, wherein the weather variation forecast information generating unit generates at least one of movement direction information, movement speed information, movement distance information, and movement time information of low atmospheric pressure in the specific region as the information used for forecasting the weather variation based on a temporal change in the atmospheric pressure gradient vector calculated by the atmospheric pressure gradient calculating unit.

5. The weather variation forecast information providing system according to Claim 1,2,3,4, wherein the atmospheric pressure gradient calculating unit calculates a three-dimensional atmospheric pressure gradient vector including atmospheric pressure gradients at a given position in three directions as elements based on the atmospheric pressure data acquired by the atmospheric pressure data acquiring unit from four of the atmospheric pressure measuring devices arranged at four positions that are not located on one plane instead of the two-dimensional atmospheric pressure gradient vector.

6. The weather variation forecast information providing system according to Claim 1,2,3,4,5,
wherein the atmospheric pressure gradient calculating unit sets three of the atmospheric pressure measuring devices arranged at three positions that are not on one straight line or four of the atmospheric pressure measuring devices arranged at four positions that are not on one plane as one set and calculates the atmospheric pressure gradient vector for each of a plurality of the sets, and
wherein the weather variation forecast information generating unit generates the information used for forecasting the weather variation based on a plurality of the atmospheric pressure gradient vectors calculated by the atmospheric pressure gradient calculating unit.

7. The weather variation forecast information providing system according to Claim 1,2,3,4,5, further comprising:

a weather variation forecast unit that determines whether or not a given criterion is satisfied based on the information used for forecasting the weather variation and forecasts an occurrence of the weather variation based on a result of the determination.

8. The weather variation forecast information providing system according to Claim 1, wherein each of the atmospheric pressure measuring devices includes a pressure-sensitive element that changes a resonance frequency in accordance with atmospheric pressure and an atmospheric pressure sensor that outputs the atmospheric pressure data according to a vibration frequency of the pressure-sensitive element.

9. The weather variation forecast information providing system according to Claim 8, wherein the pressure-sensitive element included in the atmospheric pressure sensor is a double-ended tuning fork-type piezoelectric resonator.

10. A method of providing weather variation forecast information in which information used for forecasting a given weather variation that occurs due to a change in atmospheric pressure in a specific local region is provided, the method comprising:

measuring atmospheric pressure by using at least three atmospheric pressure measuring devices that are arranged at different positions in the specific region;
consecutively acquiring the atmospheric pressure data measured by each of the atmospheric pressure measuring devices;
calculating a two-dimensional atmospheric pressure gradient vector including atmospheric pressure gradients at a given position in the specific region in two directions as elements based on the atmospheric pressure data acquired from three of the atmospheric pressure measuring devices arranged at three positions that are not located on one straight line in the consecutive acquiring of the atmospheric pressure data; and
generating the information used for forecasting the weather variation based on the atmospheric pressure gradient vector calculated in the calculating of a two-dimensional atmospheric pressure gradient vector.

FIG. 1

FIG. 2

# FIG. 3

# FIG. 4

**1** WEATHER VARIATION FORECAST INFORMATION PROVIDING SYSTEM

**4** DATA PROCESSING DEVICE

**30** PROCESSING UNIT (CPU)

**80** TRANSMISSION UNIT

**20** RECEPTION UNIT

**32** AIR PRESSURE DATA ACQUIRING SECTION

**34** AIR PRESSURE GRADIENT CALCULATING SECTION

**36** WEATHER VARIATION FORECAST INFORMATION GENERATING SECTION

**38** WEATHER VARIATION FORECAST SECTION

**40** OPERATION UNIT

**50** ROM

**52** FORECAST DETERMINING TABLE

**60** RAM

**70** DISPLAY UNIT

**10** AIR PRESSURE SENSOR

**12** TRANSMISSION UNIT

**2**

FIG. 5

FIG. 6

FIG. 7

EP 2 437 083 A2

| IDENTIFICATION ID | CRITERIA FOR DETERMINING OCCURRENCE OF WEATHER VARIATIONS | CONTENT OF WEATHER VARIATION |
|---|---|---|
| 1 | CRITERIA 1 | THUNDERSTORM |
| 2 | CRITERIA 2 | LOCALIZED TORRENTIAL RAIN |
| 3 | CRITERIA 3 | TORNADO |
| 4 | CRITERIA 4 | DOWNBURST |
| ... | | |

FIG. 8

FIG. 9

START

S10 — MEASURE NEW PRESSURE VALUE (AIR PRESSURE DATA) AND TRANSMIT MEASURED AIR PRESSURE DATA BY USING EACH AIR PRESSURE MEASURING DEVICE

S20 — ACQUIRE AIR PRESSURE DATA TRANSMITTED FROM EACH AIR PRESSURE MEASURING DEVICE BY USING DATA PROCESSING DEVICE 4

S30 — CALCULATE AIR PRESSURE GRADIENT VECTOR OF EACH SET OF AIR PRESSURE MEASURING DEVICES BASED ON ACQUIRED AIR PRESSURE DATA

S40 — DETERMINE WHETHER THERE IS LOCAL LOW AIR PRESSURE BASED ON CALCULATED AIR PRESSURE GRADIENT VECTOR

S50 IS THERE LOW AIR PRESSURE? — N

Y

S60 — SPECIFY DIRECTION AND POSITION OF LOW AIR PRESSURE BASED ON THE CALCULATED AIR PRESSURE GRADIENT VECTOR

S70 — CALCULATE MOVEMENT DIRECTION, MOVEMENT SPEED, MOVEMENT DISTANCE, MOVEMENT TIME, AND THE LIKE OF LOW AIR PRESSURE BASED ON TEMPORAL CHANGE IN DIRECTION AND POSITION OF LOW AIR PRESSURE

S80 — DETERMINE WHETHER OR NOT CRITERIA USED FOR DETERMINING OCCURRENCE OF EACH WEATHER VARIATION AS FORECAST TARGET IS SATISFIED

S100   Y   S90 ARE CRITERIA SATISFIED?   N   S110

S100 FORECAST OCCURRENCE POSITION AND OCCURRENCE TIME OF WEATHER VARIATION SATISFYING CRITERIA BASED ON MOVEMENT DIRECTION, MOVEMENT SPEED, MOVEMENT DISTANCE, MOVEMENT TIME, AND THE LIKE OF LOW AIR PRESSURE

S110 FORECAST THAT ALL WEATHER VARIATIONS AS FORECAST TARGET DOES NOT OCCUR WITHIN PREDETERMINED TIME

S120 N — HAS PROCESS BEEN COMPLETED?

Y

END

FIG. 10

FIG. 11

EP 2 437 083 A2

**EP 2 437 083 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9049884 A
- JP 3904420 B